**Europäisches Patentamt**

**European Patent Office**

**Office européen des brevets**

(19)

(11) Veröffentlichungsnummer: **0 016 991**
**B1**

(12) # EUROPÄISCHE PATENTSCHRIFT

(45) Veröffentlichungstag der Patentschrift:
10.10.84

(51) Int. Cl.³: **B 60 C 23/04**

(21) Anmeldenummer: 80101118.0

(22) Anmeldetag: 05.03.80

(54) Einrichtung zur Reifendrucküberwachung.

(30) Priorität: 12.03.79 SE 7902187

(43) Veröffentlichungstag der Anmeldung:
15.10.80 Patentblatt 80/21

(45) Bekanntmachung des Hinweises auf die Patenterteilung:
10.10.84 Patentblatt 84/41

(84) Benannte Vertragsstaaten:
**DE**

(56) Entgegenhaltungen:
DE - A - 2 850 787
FR - A - 860 704
FR - A - 1 480 072
FR - A - 1 596 295
FR - A - 2 168 002
FR - A - 2 350 974
FR - A - 2 366 543
FR - A - 2 441 502
GB - A - 2 016 383
US - A - 2 860 321
US - A - 4 090 172

(73) Patentinhaber: Siemens Aktiengesellschaft, Berlin und München Wittelsbacherplatz 2, D-8000 München 2 (DE)

(72) Erfinder: Larsson, Bengt Olof, Aslögsvägen 12, S-163 53 Stockholm (SE)
Erfinder: Engdahl, Per, Björkvik, S-170 17 Färentuna (SE)

BUNDESDRUCKEREI BERLIN

## Beschreibung

Die Erfindung betrifft eine Einrichtung zur Reifendrucküberwachung bei Straßenfahrzeugen mit einem am Rad- und/oder der Achse angeordneten Sender für die drahtlose Übertragung eines vom Reifendruck abhängigen Signals, das von einem am Rad angeordneten Sender auf einen Empfänger am Fahrzeugrahmen oder dergleichen durch Strahlung, die in Abhängigkeit vom Reifendruck moduliert ist, übertragen wird. Derartige Einrichtungen sind bekannt (US-A-4 090 172).

Die bekannten Einrichtungen benutzen in der Regel Hochfrequenzsender, die von einem Reifendruckfühler gesteuert werden und auf einen im Fahrzeug angebrachten Empfänger wirken, der eine Anzeige am Armaturenbrett auslöst sobald ein unzulässiger Druckabfall eintritt. Eine bekannte Einrichtung (US-A-4 090 172), arbeitet zur Signalübertragung mit Hochfrequenz oder einer direkt elektrisch leitenden und drehfähigen Verbindung.

Eine Übertragungsstrecke zwischen zwei relativ zueinander drehenden Teilen auszuführen, gibt es allgemein mehrere Möglichkeiten, wobei auch die Vor- und Nachteile der Infrarotstrahlung für Nachrichtenübermittlung untersucht sind (FR-A-2 350 974).

Die bekannten Einrichtungen mit drahtloser Hochfrequenzübertragung haben den Nachteil, daß nur sehr geringe Hochfrequenzenergien benutzt werden dürfen, so daß die Hochfrequenzenergie von in der Nachbarschaft befindlichen Störern, wie z. B. Zündstörungen anderer Fahrzeuge, elektrischer Bahnen und dergleichen die Funktionsweise stark beeinträchtigen können. Auch können durch starke elektrische Entladungen Sender und Empfänger zerstört werden.

Die Erfindung geht von der Erkenntnis aus, daß sich mit Infrarotübertragung eine drahtlose Verbindung herstellen läßt, die auch bei geringer Sendeenergie nicht störungsanfällig ist und durch andere Nachrichtenübertragungen und Zündstörungen nicht gestört werden kann, bzw. diese selbst auch nicht stört. Der Erfindung liegt die Aufgabe zugrunde, eine Reifendrucküberwachung bei Straßenkraftfahrzeugen zu entwickeln, die weder selbst stört noch unter den Bedingungen der Praxis störanfällig ist.

Die Lösung der geschilderten Aufgabe besteht nach der Erfindung darin, daß die Sendeeinrichtung mit einer Infrarotquelle, insbesondere Infrarotleuchtdiode ausgestattet ist, und ständig während des Fahrbetriebes Signale abgibt und den Druckabfall in einem oder mehreren Reifen durch Veränderung des Signalinhaltes und/oder Unterbrechung der Signalabgabe meldet, wozu die Infrarotquelle an einem Ort mit geringer Verschmutzungsgefahr des Rades, wie auf der Innenseite der Felge oder an einer Stelle hoher Umfangsgeschwindigkeit, angebracht ist, und daß der Empfänger am Fahrgestell dadurch gegen Verschmutzung gesichert ist, daß die Eintrittsblende für die Infrarotstrahlung durch einen Luftstrom gegen das Eindringen von Verschmutzung gesichert ist.

Bei der erfindungsgemäßen Einrichtung kommt zum Tragen, daß die Infrarotübertragung auch in einem weiten Raumwinkel möglich ist und durch Verschmutzung nur in sehr geringem Maße gestört wird. Durch ein sich selbst überwachendes System wird der Fahrer auf die gegebenenfalls notwendige Reinigung hingewiesen, die dann auch gleichzeitig bei den Rückleuchten des Fahrzeuges erforderlich wird.

Es wird nicht nur ein bestimmtes Übertragungsmedium und eine bestimmte Übertragungsart ausgewählt, sondern eine auf die Praxis zugeschnittene robuste Lösung bereitgestellt. Dabei wäre an sich anzunehmen, daß eine Infrarotübertragung erst recht durch Verschmutzung störanfällig sein sollte; die erfindungsgemäße Einrichtung vermeidet dies jedoch und bringt den Vorteil zum Tragen, daß diese Einrichtung auch andere Einrichtungen nicht stört.

Die Einrichtung und weitere erfindungsgemäße Einzelheiten sind nachstehend anhand der in den Zeichnungen dargestellten Ausführungsbeispiele näher erläutert. Es zeigt

Fig. 1 einen mit der erfindungsgemäßen Einrichtung ausgestatteten Lastkraftwagen,

Fig. 2a und 2b in schematischer Weise die Übertragung vom Sender auf den Empfänger bei Doppel- und Einfachbereifung.

Fig. 3 zeigt schematisch in vereinfachter Weise den Sender.

Fig. 4 zeigt in vereinfachter Darstellung die Stromversorgung und Ansteuerung des Senders.

Fig. 5 zeigt die Abschalteinrichtung zur Abschaltung des Senders bei Stillstand des Fahrzeuges.

Fig. 6 zeigt die auf den Radnaben anzubringenden Druckfühler mit dem Sender- und Batteriegehäuse.

Fig. 7 zeigt als Ausführungsbeispiel der Erfindung eine Anzeigeeinrichtung für das Armaturenbrett eines Lastzuges sowie schematisch die daran anzuschließenden Empfänger.

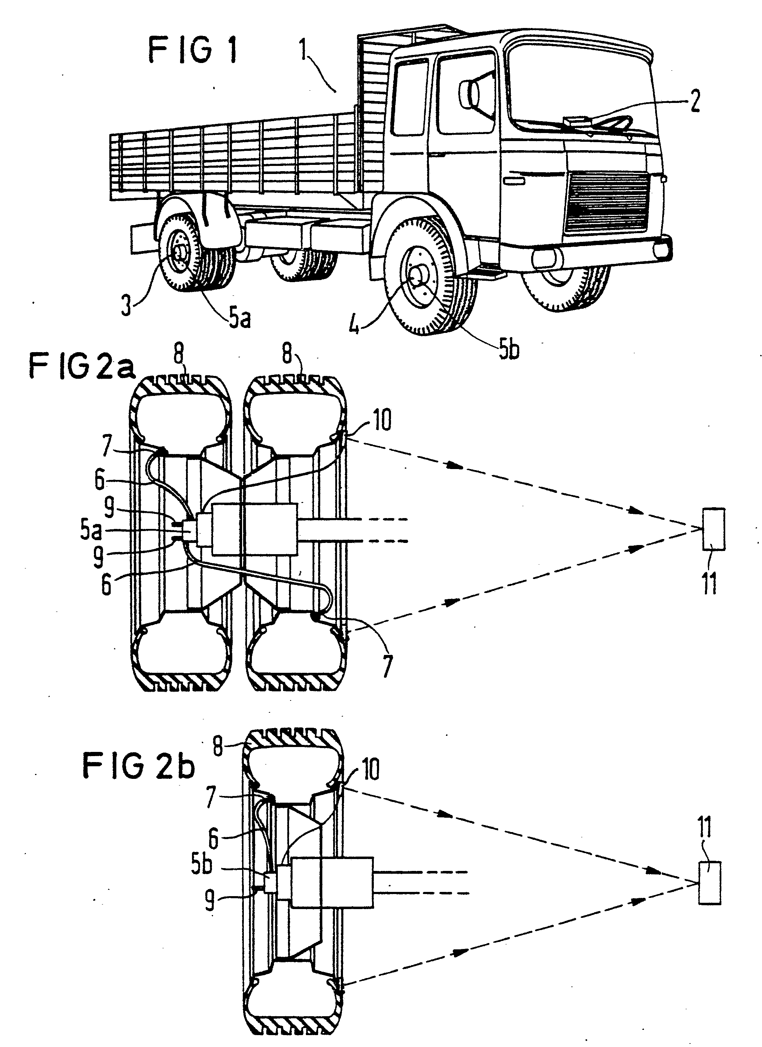

In Fig. 1 ist ein Lastwagen 1 dargestellt, an dessen Armaturenbrett eine Überwachungseinrichtung 2 für den Reifendruck angebracht ist. Diese wird später näher beschrieben. An den Radnaben 3, 4 bzw. den dort angebrachten Lagerdeckeln oder dergl. sind die Sendeeinrichtungen 5a und 5b für die Überwachungssignale angebracht. Mit 5a ist eine Sendeeinrichtung für Doppelbereifung, mit 5b eine Sendeeinrichtung für Einfachbereifung bezeichnet.

In Fig. 2a ist schematisch die Überwachungsanordnung für ein doppelbereiftes Rad dargestellt. Die Sendeeinrichtung 5a, die später noch näher erläutert wird, besitzt Schlauchanschlüsse 6 zu den Ventilen 7 der Reifen 8. Die Einrichtung 5a besitzt Füllstutzen 9 zum Prüfen und Nachfüllen der Reifenluft, und ferner enthält die Einrichtung 5a den Sender, welcher die Überwachungs-

signale mittels einer Infrarotsendequelle 10 an den Empfänger 11 sendet. Als Infrarotsendequelle 10 dient zweckmäßig eine Infrarothalbleiterdiode, wie sie für Fernsehempfänger, Fernbedienungen handelsüblich ist.

Der Empfänger 11 enthält eine infrarotempfindliche Fotodiode, deren Empfindlichkeit und Empfangsraumwinkel derart bemessen wird, daß sowohl die direkte Strahlung der Quelle 10 als auch die reflektierte Strahlung von den Fahrzeugteilen noch sicher empfangen wird.

In Fig. 2b ist die Übertragungsanordnung für Einfachbereifung dargestellt. Die Bezugszeichen von Fig. 2a sind dort für gleiche Teile übernommen. Die Sendeeinrichtung für Einfachbereifung ist mit 5b bezeichnet. Alle übrigen Teile entsprechen Fig. 2a.

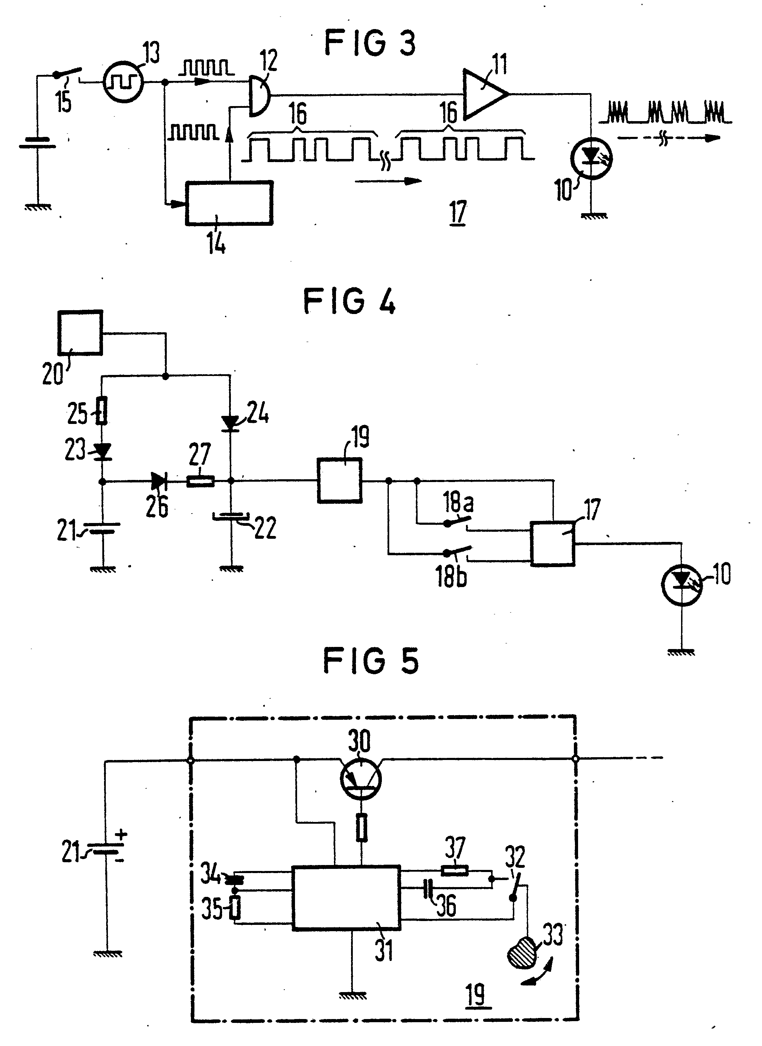

Anhand von Fig. 3 sei die Sendeanordnung näher erläutert. Die Infrarotsendediode 10 wird über einen Verstärker 11 von dem UND-Gatter 12 aus dem Oszillator 13 impulsweise angesteuert. Der Impulsuntersetzer 14 bewirkt, daß nur in größeren Zeitabständen, z. B. 30 Sekunden, ein Impuls an die Infrarotdiode 10 gesendet wird. Dies hat den Vorteil, daß der Energieverbrauch für den Verstärker 11 und die Diode 10 sehr gering gehalten wird, so daß die ganze Sendeanordnung aus einer kleinen Batterie betrieben werden kann. Dies wird näher später noch anhand von Fig. 4 erläutert. Die Anordnung kann so getroffen werden, daß bei Unterschreiten des zulässigen Luftdruckes die Betriebsspannung für den Oszillator unterbrochen wird, wie dies durch den Kontakt 15 angedeutet ist.

Das von der Infrarotdiode ausgesendete Signal besteht also in einer Impulsfolge 16, die beispielsweise im Abstand von 20 Sekunden ausgesendet wird. Dabei sind die Impulse mit der Frequenz des Oszillators 13 selbst moduliert. Die Impulsfolge 16 dauert z. B. nur wenige Millisekunden. Auf diese Weise ist es möglich, für jede Achse bzw. jedes Rad oder jeden Reifen eine eigene Kennung auszusenden.

Anhand von Fig. 4 sei nachstehend die Stromversorgung des Senders in Verbindung mit der Signalisierung für jeden Reifen beschrieben. Die Infrarotsendediode ist in Fig. 4 wieder mit 10 bezeichnet. Der Sender 17 entspricht der Anordnung nach Fig. 3. Zur Feststellung eines defekten Reifens sind Kontakte ab 18a und 18b vorgesehen, deren Betätigung durch einen Luftdruckfühler den Informationsinhalt des Senders verändert, so daß aus der gesendeten Information erkennbar wird, welcher Reifen seinen zulässigen Luftdruck unterschritten hat. Mit Hilfe der Kontakte 18a und 18b kann z. B. die Frequenz des Oszillators 13 in Fig. 3 geändert werden, oder es ist möglich, das Verhältnis des Impulsuntersetzers 14 in Fig. 3 umzuschalten. Da mehrere Möglichkeiten zur Veränderung des Informationsinhaltes bestehen, ist es möglich, nicht nur den Reifen, welcher Luft verliert anzuzeigen, sondern es ist auch möglich, Luftüberdruck oder andere Erscheinungen zusätzlich zu melden. Die Stromversorgung des Senders 17 erfolgt über die Abschalteinrichtung 19 – welche später anhand von Fig. 5 noch erläutert wird – aus der Batterie 21. Die Batterie 21 kann als aufladbarer Akkumulator ausgebildet sein und von einer zusätzlichen Energiequelle 20 Ladestrom erhalten. Auf die zusätzliche Energiequelle 20 wird später noch gesondert eingegangen. Der Kondensator 22, der als Elektrolytkondensator mit einer Kapazität von z. B. etwa 1000 μF ausgebildet sein kann, dient als Energiespeicher zur kurzzeitigen Abgabe des für die Sendung einer Impulsreihe erforderlichen Speisestroms für den Sender 17. Die Batterie 21 sorgt über die Diode 26 zur Nachladung des Kondensators 22, sofern nicht von der zusätzlichen Energiequelle 20 über die Diode 24 der Kondensator 22 nachgeladen werden kann. Die Widerstände 25 und 27 dienen als Strombegrenzungswiderstände. Die anhand von Fig. 4 beschriebene Anordnung ermöglicht also auch bei völlig entladener Batterie 21 eine Inbetriebnahme nach langer Stillstandzeit des Fahrzeuges, sobald aus der zusätzlichen Energiequelle der Kondensator 22 aufgeladen werden kann. Eine gewisse überschüssige Strommenge aus der Quelle 20 erlaubt dann bei längerem Betrieb das Nachladen der Batterie 21, so daß während Betriebspausen die Batterie 21 eine Wirksamkeit des Systemes sicherstellt. Andererseits kann während des Betriebes selbst bei Defekt der Batterie 21 die Überwachung erhalten bleiben, sofern aus der zusätzlichen Stromquelle soviel Energie geliefert wird, daß der Kondensator 22 immer wieder nachgeladen werden kann. Die zusätzliche Energiequelle 20 kann aus einem Drehtransformator bestehen, welcher aus dem Bordnetz des Fahrzeuges Wechselstrom, der später gleichgerichtet wird, auf das sich mit dem Rad mitdrehende Sendesystem überträgt. Ferner ist es möglich, mit Hilfe einer Solarzelle oder eines Stromerzeugers, der durch die Radumdrehungen Energie erzeugt, die Batterie 21 nachzuladen.

In Fig. 5 ist die in Fig. 4 mit 19 bezeichnete Abschalteinrichtung dargestellt. Diese Abschalteinrichtung hat die Aufgabe, zur Schonung der Batterie 21 die Stromzufuhr zum Sender 17 zu unterbrechen, damit bei längeren Betriebspausen die Batterie nicht unnötig belastet wird.

Die Abschalteinrichtung 19 enthält einen Schalttransistor 30, der durch eine monostabile Kippschaltung 31 (Monoflop) mit großer Zeitkonstante gesteuert wird. Das Zeitglied 34, 35 der monostabilen Kippschaltung 31 ist beispielsweise derart bemessen, daß nach Zuführung eines Triggerimpulses über den geschlossenen Schalter 32 der Transistor 30 für zehn Minuten durchlässig gesteuert bleibt, so daß kurze Haltepausen, beispielsweise an Ampeln mit Sicherheit überbrückt werden. Andererseits wird bei längeren Haltepausen die Stromversorgung zum Sender 17 unterbrochen, sofern nicht durch eine bewegliche Masse 33 zur Folge der Radumdrehung der Kontakt 32 geschlossen wird und über das RC-Glied 36, 37 einen Triggerimpuls an die monostabile Kippschaltung 31 zur Ansteuerung des Schalttransistors 30 geliefert wird. Auf diese Weise ist sichergestellt, daß die Reifendrucküberwachungseinrichtung bei kürzeren Aufenthalten, z. B. an einer Bahnschranke, Verkehrsampel oder dergl. weiterarbeitet. Nach einer gewissen Zeit, die von mehreren Minuten bis zu einer Stunde betragen kann, wird die Batterie selbsttätig abgeschaltet. Die selbsttätige Überwachung setzt jedoch bereits nach der ersten Radumdrehung wieder ein, da durch die bewegliche Masse 33 ein Triggerimpuls den Schalttransistor 30 durchlässig steuert. Es ist also möglich auch ohne die zusätzliche Energiequelle 20 mit Hilfe einer Trockenbatterie über längere Zeit die Überwachungseinrichtung zu betreiben, da während längerer Stillstandszeiten mit Sicherheit eine Strombelastung unterdrückt wird.

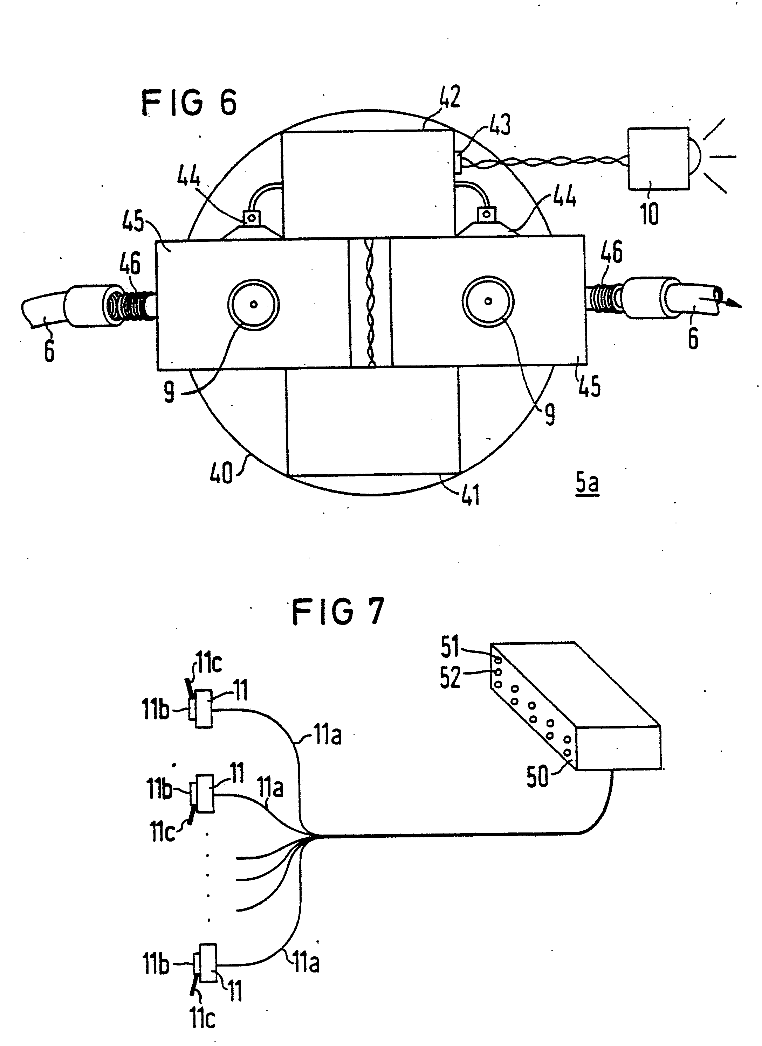

In Fig. 6 ist als Ausführungsbeispiel die an der Radnabe anzubringende Sendeanordnung dargestellt. Es handelt sich hier um eine Sendeeinrichtung für Doppel- oder Zwillingsbereifung, wie sie in Fig. 1 mit 5a bezeichnet ist. Bei den verwendeten Bezugszeichen sind gleiche Zeichen für die gleichen Teile in den Fig. 1 und 2a vorgesehen. In Fig. 6 ist auf der Grundplatte 40 die an der Radnabe oder dem Radlagergehäuse befestigt sein kann, für jeden Reifen ein Druckfühlergehäuse 45 angebracht, welches den Druckfühler 44, den Schlauchanschluß 46 zum jeweiligen Reifen und den Füllstutzen 9 zur Luftdruckkontrolle und Luftnachfüllung trägt. Ferner ist auf der Grundplatte 40 das Batteriegehäuse 41 angebracht, das zweckmäßig leicht geöffnet werden kann, falls die Anordnung mit einer Trockenbatterie arbeiten soll, die von Zeit zu Zeit ausgetauscht werden muß. Zur Aufnahme des Senders dient das Sendergehäuse 42, an dem ein Anschluß für die Infrarotquelle 43 angeordnet ist. Die Infrarotquelle selbst ist mit 10 bezeichnet und wie in Fig. 2a dargestellt, zweckmäßig auf der Innenseite der Felge unter dem Wagen angebracht, so daß sie auch bei rotierenden Rädern auf den Empfänger 11 (siehe Fig. 2a) einwirken kann, der beispielsweise bei der Hinterachse am Differentialgehäuse befestigt werden kann. Die Anordnung gemäß der Erfindung hat den Vorteil, daß die Füllstutzen 9 zur Prüfung und Nachfüllung der Luft leicht zugänglich sind, und daß sich der Sender zusammen mit seiner Batterie an leicht zugänglicher Stelle des Kraftfahrzeuges befindet. Zum Schutz gegen Beschädigung kann eine Schutzkappe aus Stahl vorgesehen werden, welche über der Grundplatte 40 und den darauf angeordneten Gehäusen angebracht ist. Zweckmäßig wird die Anordnung derart getroffen, daß auch bei Abreißen eines Schlauches 6 das Ventil 7 am Reifen schließt, so daß dadurch der Luftdruck nicht verlorengehen kann. Andererseits weist die Reifendrucküberwachungseinrichtung auf eine Beschädigung hin, da der Druckfühler 44 dabei einen Druckabfall meldet.

In Fig. 7 ist schematisch ein Ausführungsbeispiel der Gesamteinrichtung dargestellt. Die Empfänger 11 sind über Leitungen 11a mit dem Kontrollgerät 50 im Führerstand des Fahrzeuges verbunden. Um die Verschmutzung der Eintrittspupille 11b, die nur wenige Millimeter Durchmesser hat, zu vermeiden, können die Empfänger 11 mit einem Druckluftanschluß 11c versehen sein, der einen ständigen Luftstrom durch die Eintrittspupille 11b nach außen gewährleistet.

Das Kontrollgerät 50 enthält eine Leuchtanzeige 51 für den Alarmfall, die mit einem akustischen Signalgeber verbunden sein kann. Ferner sind für jeden Reifen weitere Signalanzeigelampen 52 vorgesehen. Die Anordnung hat beispielsweise folgende Wirkung: bei Inbetriebsetzen des Fahrzeuges leuchtet gegebenenfalls nach einer gewissen Verzögerungszeit die Warnanzeige 51 auf. Dadurch läßt sich das Funktionieren dieser Anzeigeeinrichtung kontrollieren. Nach einer weiteren Zeitverzögerung erlischt die Anzeige 51 und die Anzeigelampen 52 leuchten auf, um das ordnungsgemäße Funktionieren der Übertragungseinrichtungen anzuzeigen. Bei Defekt eines Reifens verlischt die dem jeweiligen Reifen zugeordnete Anzeigeeinrichtung 52 und die Hauptkontrollanzeige 51 leuchtet auf. Dabei kann auch ein akustisches Alarmsignal ausgelöst werden. Die Auslösung des akustischen Alarmsignals wird zweckmäßig durch eine weitere Verzögerungseinrichtung um einige Sekunden verzögert, damit bei Inbetriebsetzung die unnötige akustische Signalgabe vermieden wird und erst bei kritischen Zuständen eine Warnung erfolgen kann.

**Patentansprüche**

1. Einrichtung zur Reifendrucküberwachung bei Straßenkraftfahrzeugen (1) mit einem am Rad- und/oder der Achse (3, 4) angeordneten Sender (5a, 5b) für die drahtlose Übertragung eines vom Reifendruck abhängigen Signales, das von einem am Rad angeordneten Sender (5a, 5b) auf einen Empfänger (11) am Fahrzeugrahmen oder dergleichen durch Strahlung, die in Abhängigkeit vom Reifendruck moduliert ist, übertragen wird, dadurch gekennzeichnet, daß die Sendeeinrichtung (5a, 5b, 17) mit einer Infrarotquelle (10), insbesondere Infrarotleuchtdiode ausgestattet ist, und ständig während des Fahrbetriebes Signale abgibt und den Druckabfall in einem oder mehreren Reifen durch Veränderung des Signalinhaltes und/oder Unterbrechung der Signalabgabe meldet, wozu die Infrarotquelle (10) an einem Ort geringer Verschmutzungsgefahr des Rades, wie auf der Innenseite der Felge oder an einer Stelle hoher Umfangsgeschwindigkeit, angebracht ist, und daß der Empfänger (11) am Fahrgestell dadurch gegen Verschmutzung gesichert ist, daß die Eintrittsblende für die Infrarotstrahlung durch einen Luftstrom gegen das Eindringen von Verschmutzung gesichert ist.

2. Einrichtung nach Anspruch 1, dadurch gekennzeichnet, daß zur Aufladung der Batterie (21) des Senders (17) und/oder zur direkten Speisung des Senders (17) Mittel (20) zur Energieübertragung von Wagenrahmen auf die Sender anordnung (5a, 5b) vorgesehen sind, die beispielsweise aus einem Drehtransformator oder einer Induktionsschleife bestehen.

3. Einrichtung nach Anspruch 2, dadurch gekennzeichnet, daß als Energiequelle für den Sender bzw. zum Aufladen der Batterie ein von Rotation der Räder betriebener Generator vorgesehen ist.

4. Einrichtung nach einem der vorhergehenden Ansprüche, dadurch gekennzeichnet, daß parallel zu der den Sender (17) speisenden Batterie (21) ein Kondensator (22) geschaltet wird, der eine so große Kapazität besitzt, daß die gespeicherte Energie ausreicht, den Sender so lange zu speisen, daß dieser mindestens eine vollständige Signalimpulsfolge aussenden kann.

5. Einrichtung nach einem der vorhergehenden Ansprüche, dadurch gekennzeichnet, daß der Sender (17) ständig — zumindest während des Wagenbetriebes — Signale abgibt, die der Funktionsüberwachung dienen.

6. Einrichtung nach einem der vorhergehenden Ansprüche, dadurch gekennzeichnet, daß der Sender (17) zumindest für das Überwachungssignal Impulse oder Impulsreihen mit großem Impuls/Pausenverhältnis abgibt, so daß der Energieverbrauch gering gehalten wird.

7. Einrichtung nach einem der Ansprüche 1 bis 6, dadurch gekennzeichnet, daß sich die Überwachungseinrichtung bei längerem Stillstand des Fahrzeuges selbsttätig ausschaltet und bei erneuter Inbetriebsetzung selbsttätig wieder eingeschaltet wird.

8. Einrichtung nach Anspruch 7, dadurch gekennzeichnet, daß ein lageabhängiger bzw. massebetätigter Schalter in der am Rad befestigten Sendeeinrichtung (5a, 5b) angeordnet ist und ein Schaltglied (30, 31) mit großer Zeitkonstante ansteuert, sobald das betreffende Rad in Bewegung gesetzt wird.

9. Einrichtung nach einem der Ansprüche 1 bis 8, dadurch gekennzeichnet, daß der Sender (10) mit mindestens einem Druckfühler (44) als Einheit (5b) auf der Radnabe befestigt ist und daß an dieser Einheit (5b) mindestens ein Reifenfüllventil (9) angebracht ist.

10. Einrichtung nach einem der Ansprüche 1 bis 9, dadurch gekennzeichnet, daß nach längerer Betriebspause des Fahrzeuges die Überwachungsanzeige durch Verzögerungsmittel gleichzeitig für alle Reifen wieder hergestellt wird.

11. Einrichtung nach einem der Ansprüche 1 bis 10, dadurch gekennzeichnet, daß im Führerstand des Fahrzeuges (1) eine Überwachungseinrichtung (2) mit einem Kontrollgerät (50) angebracht ist, welches optische Anzeigemittel (52) für den Druckfall jedes einzelnen Reifens des Fahrzeuges (1) enthält.

## Claims

1. A tyre pressure monitoring device for road vehicles (1) having a transmitter (5a, 5b) arranged on the wheel and/or axle (3, 4) for radiation of a signal dependent upon the tyre pressure from the transmitter (5a, 5b) arranged on the wheel to a receiver (11) on the vehicle frame or the like, the radiation being modulated in dependence upon the tyre pressure, characterised in that the transmitting device (5a, 5b, 17) is equipped with an infra-red source (10), in particular an infra-red luminescent diode, and during travel constantly emits signals to indicate any pressure drop in one or more tyres by modifying the signal content and/or interrupting the signal emission, for which purpose the infra-red source (10) is fixed at a location of the wheel in little danger of pollution, such as inside the rim or at a point of high peripheral speed, and that the receiver (11) on the vehicle frame is protected against pollution in that the input diaphragm for the infra-red radiation is protected against penetration of contamination.

2. A device as claimed in claim 1, characterised in that in order to charge the battery (21) of the transmitter (17) and/or in order to directly feed the transmitter (17), means (20) are provided to transmit energy from the vehicle frame to the transmitter arrangement (5a, 5b), for example, a rotary transformer or an induction coil.

3. A device as claimed in claim 2, characterised in that a generator operated by rotation of the wheels, is provided as an energy source for the transmitter or for charging the battery, as the case may be.

4. A device as claimed in one of the preceding claims, characterised in that a capacitor (22) is switched parallel to the battery (21) feeding the transmitter (17), which capacitor has a capacitance so large that the stored energy is sufficient to feed the transmitter for a period sufficient to emit at least one complete signal pulse train.

5. A device as claimed in one of the preceding claims, characterised in that the transmitter (17) constantly emits signals to monitor the functions, at least during vehicle operation.

6. A device as claimed in one of the preceding claims, characterised in that the transmitter (17) transmits pulses or pulse trains of a large pulse space ratio, at least for the monitoring signal, so that the energy consumption is maintained at a low level.

7. A device as claimed in one of claims 1 to 6, characterised in that in the event of a lengthy standstill of the vehicle, the monitoring device is automatically switched off, and automatically switched on again when restarted.

8. A device as claimed in claim 7, characterised in that a position-dependent or inertia-operated switch is arranged in the transmitting device (5a, 5b) secured on the wheel and controls a switching element (30, 31) with a large time constant as soon as the respective wheel is set into motion.

9. A device as claimed in one of claim 1 to 8, characterised in that the transmitter (10) having at least one pressure sensor (44) is secured on the wheel hub as a unit (5b) and that at least one tyre inflating valve (9) is fixed on this unit (5b).

10. A device as claimed in one of claims 1 to 9, characterised in that after a lengthy operating pause of the vehicle the monitoring display is simultaneously restored for all tyres by delay elements.

11. A device as claimed in one of claims 1 to 10, characterised in that there is arranged in the driver's cab of the vehicle (1) a monitoring device (2) having a control apparatus (50) which contains pressure drop optical display means (52) for each individual tyre of the vehicle (1).

**Revendications**

1. Dispositif pour contrôler le pression de pneumatiques de véhicules routiers (1) comportant un émetteur (5a, 5b) disposé sur la roue et/ou l'essieu (3, 4) et servant à la transmission sans fil d'un signal dépendant de la pression du pneumatique et qui est transmis par un émetteur (5a, 5b) monté sur la roue à un récepteur (11) monté sur le châssis du véhicule ou analogue, au moyen d'un rayonnement modulé en fonction de la pression du pneumatique, caractérisé par le fait que le dispositif émetteur (5a, 5b, 17) est muni d'une source à infrarouge (10) notamment d'une diode à luminescence infrarouge, et délivre des signaux en permanence pendant le déplacement du véhicule et indique la chute de pression dans un ou plusieurs des pneumatiques par modification du contenu du signal et/ou interruption de la délivrance du signal, la source à infrarouge (10) étant disposée en un endroit de la roue pour lequel le risque de salissement est faible, comme par exemple sur la face intérieure de la jante ou en un emplacement possédant une vitesse circonférentielle élevée, et que le récepteur (11) fixé sur le châssis du véhicule est protégé contre tout salissement grâce au fait que le diaphragme d'entrée du rayonnement infrarouge est protégé par un courant d'air contre la pénétration de saletés.

2. Dispositif suivant la revendication 1, caractérisé par le fait que pour la charge de la batterie (21) de l'émetteur (17) et/ou pour l'alimentation directe de l'émetteur (17), il est prévu des moyens (20) servant à transmettre l'énergie du châssis du véhicule au dispositif émetteur (5a, 5b) et qui sont constitués, par exemple, par un transformateur rotatif ou par une boucle d'induction.

3. Dispositif suivant la revendication 2, caractérisé par le fait qu'il est prévu, comme source d'énergie, pour l'émetteur ou pour la charge de la batterie, un générateur entraîné par la rotation des roues.

4. Dispositif suivant l'une des revendications précédentes, caractérisé par le fait qu'en parallèle avec la batterie (21) alimentant l'émetteur (17) se trouve branché un condensateur (22) qui possède une capacité suffisamment importante pour que l'énergie accumulée suffise pour alimenter l'émetteur jusqu'à ce que ce dernier puisse émettre au moins une suite complète d'impulsions de signaux.

5. Dispositif suivant l'une des revendications précédentes, caractérisé par le fait que l'émetteur (17) délivre en permanence — au moins pendant le déplacement du véhicule — des signaux qui servent au contrôle du fonctionnement.

6. Dispositif suivant l'une des revendications précédentes, caractérisé par le fait que l'émetteur (17) délivre au moins pour le signal de contrôle, des impulsions ou des suites d'impulsions possédant un rapport impulsion/pause entre impulsions élevé, de sorte que la consommation d'énergie est maintenue à un faible niveau.

7. Dispositif suivant l'une des revendications 1 à 6, caractérisé par le fait que le dispositif de contrôle se débranche automatiquement pendant un arrêt d'assez longue durée du véhicule et est à nouveau branché automatiquement lors d'une nouvelle mise en marche du véhicule.

8. Dispositif suivant la revendication 7, caractérisé par le fait qu'un commutateur, qui dépend d'une position ou est actionné par une masse, est monté dans le dispositif émetteur (5a, 5b) fixé sur la roue, et commande un organe de commutation (30, 31) possédant une constante de temps élevée, dès que la roue considérée est mise en mouvement.

9. Dispositif suivant l'une des revendications 1 à 8, caractérisé par le fait que l'émetteur (10), ainsi qu'au moins un capteur de pression (44), est fixé sous la forme d'une unité (5b) sur le moyeu de la roue et qu'au moins une valve (9) de remplissage du pneumatique est montée sur cette unité (5b).

10. Dispositif suivant l'une des revendications 1 à 9, caractérisé par le fait qu'après un arrêt assez long du fonctionnement du véhicule, l'affichage de contrôle est rétabli simultanément pour tous les pneumatiques à l'aide de moyens de temporisation.

11. Dispositif suivant l'une des revendications 1 à 10, caractérisé par le fait que dans le poste de conduite du véhicule (1) se trouve installé un dispositif de contrôle (2) comportant un appareil de contrôle (5) qui contient des moyens d'affichage optiques (52) de la chute de pression de chaque pneumatique du véhicule (1).

0 016 991

FIG 1

FIG 2a

FIG 2b

0 016 991

# FIG 3

# FIG 4

# FIG 5

9

# FIG 6

5a

# FIG 7